# EUROPEAN PATENT SPECIFICATION

(11) **EP 2 472 786 B1**
(45) Date of publication and mention of the grant of the patent: **03.09.2014**
(21) Application number: 11009785.4
(22) Date of filing: 12.12.2011
(51) Int. Cl.: H04L 12/26, H04L 29/06

(54) **Automatic signature generation for application recognition and user tracking over heterogeneous networks**
Automatische Signaturerzeugung zur Anwendungserkennung und Benutzerverfolgung über heterogene Netzwerke
Génération de signatures automatique pour la reconnaissance d'application et le suivi d'utilisateurs dans des réseaux hétérogènes

(30) Priority: 30.12.2010 US 982869
(43) Date of publication of application: 04.07.2012
(73) Proprietor: Telefonaktiebolaget LM Ericsson (publ), 164 83 Stockholm (SE)
(72) Inventor: Szabo, Geza, Kecskemet 6000 (HU); Turányi, Zoltán Richárd, Szentendre 2000 (HU)
(74) Representative: Röthinger, Rainer

(56) References cited:
- WO-A2-2005/109788
- US-A1- 2009 300 153
- "Application Protocol Identification in Data Network Based on Naive Bayes Identifier", IP.COM JOURNAL, IP.COM INC., WEST HENRIETTA, NY, US, 23 December 2008 (2008-12-23), XP013128336, ISSN: 1533-0001
- GÉZA SZABÓ ET AL: "Automatic Protocol Signature Generation Framework for Deep Packet Inspection", PROCEEDINGS OF THE 5TH INTERNATIONAL ICST CONFERENCE ON PERFORMANCE EVALUATION METHODOLOGIES AND TOOLS, 16 May 2011 (2011-05-16), XP055097177, DOI: 10.4108/icst.valuetools.2011.245606 ISBN: 978-1-93-696809-1

## Description

### Technical Field

The general inventive concept of the present invention relates to networks and more particularly, to systems and methods for evaluating and profiling network traffic.

### Background

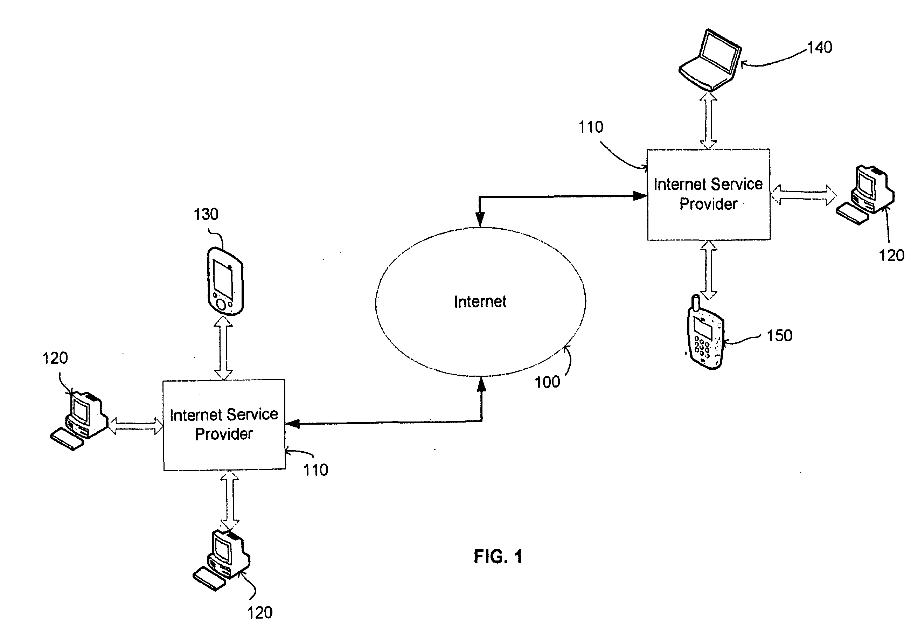

In a relatively short period of time, Internet usage has expanded astronomically. As illustrated in Fig. 1, a user typically accesses the Internet 100 via an Internet Service Provider (ISP) 110. A user may communicate with the ISP 110 via any number of processor-based devices including, but not limited to, personal computers (PCs) 120, Personal Digital Assistance (PDAs), laptop computers 140, smart phones and cell phones 150, etc. with the ever-expanding access and usage of the Internet, ISPs 110 have found that critical to be able to monitor and control access to the Internet 100 in order to assure consistent quality of service (QoS) for users under constantly varying traffic loads. However, the aforementioned need to monitor and control communications traffic is not limited to simply accessing the Internet. All communication networks require such a monitoring and control in order to assure uniform QoS.

Therefore, various methods of communication traffic profiling have been developed. However, in-depth understanding of Internet traffic profile is a challenging task for researchers and mandatory for most ISPs. Deep Packet Inspection (DPI) assists ISPs in profiling networked applications. Based on this profiling information, ISPs may apply different charging policies, traffic shaping and offer different quality of service (QoS) guarantees to selected users and/or applications. Many critical network services may rely on the inspection of packet payload content instead of solely examining the structured information found in packet headers. New techniques are desired in network devices for packet analysis based on content.

Existing deep packet inspection (DPI) tools and techniques rely on comparing the content of the packet payload with a set of strings or regular expressions which is assumed to represent a given "signature" of an application. The collection and definition of the proper signatures is a time consuming and challenging task requiring manual effort from protocol experts. In order to ease this manual effort, automatic protocol signature generation tools assist in processing the network traces of a specific application and in defining signature candidates.

One such DPI algorithm is disclosed in WO 2005/109788 A2. A parsing processor provides instruction-driven content inspection of network packets at 10-Gbps and above with a parsing engine that executes parsing instructions. A flow state unit maintains statefulness of packet flows to allow content inspection across several related network packets. A state-graph unit traces state-graph nodes to keyword indications and/or parsing instructions. The parsing instructions can be derived from a high-level application to emulate user-friendly parsing logic. The parsing processor sends parsed packets to a network processor unit for further processing.

Automatic signature generation is cumbersome due to the several requirements that must be fulfilled. Among these requirements are: the generation should be automatic; it should process a high number of samples within a reasonable time period; it should provide the longest possible signature candidates; and it should find important signatures to accurately represent the underlying traffic.

As described in an article entitled "The Earlybird System for the Real-time Detection of Unknown Worms", UCSD, Department of Computer Science, Technical Report CS2003-0761, by S. Singh, C. Estan, G. Varghese, and S. Savage, (hereinafter referred to as Earlybird and incorporated herein by reference) fingerprints of fixed length payload substrings are calculated. A sliding window for the selection of substrings is applied. The signatures are stored via their Rabin-Fingerprint. The source and destination host identifiers (srcIP, dstIP) are taken into account to help in the detection of worm infection.

As described in an article entitled "Autograph: Toward Automated, Distributed Worm Signature Detection," in In Proceedings of the 13th Usenix Security Symposium, 2004, pp. 271-286, by H. ah Kim, (hereinafter referred to as Autograph and incorporated herein by reference) signatures are generated by analyzing the prevalence of portions of flow payloads. This does not use knowledge of protocol semantics above the TCP level. It is designed to produce signatures that exhibit high sensitivity (high true positives) and high specificity (low false positives). The aforementioned article is similar to one by Eric Conrad entitled "Detecting Spam with Genetic Regular Expressions," (herein referred to as GenRegexp and incorporated herein by reference) in the ways of scoring true positive and false positive hits. Autograph uses variable-length content blocks using content-based payload partitioning. The fingerprint is done in the same way as in Earlybird. Autograph filters the candidate fingerprints by the flow destination host cardinality which is typically high for malware.

As described, in an article entitled "Polygraph: Automatically generating signatures for polymorphic worms," in SP '05: Proceedings of the 2005 IEEE Symposium on Security and Privacy. Washington, DC, USA: IEEE Computer Society, 2005, pp. 226-241 by J. Newsome, B. Karp, and D. Song (herein referred to as Polygraph and incorporated herein by reference). Polygraph uses a similar to a ML-based (maximum-likelihood) approach by P. Haffner, S. Sen, O. Spatscheck, and D. Wang, "Acas: automated construction of application signatures," in MineNet '05, New York, NY, USA, 2005 (herein referred to as ACAS and incorporated herein by reference). In Polygraph the substrings are called tokens. The tokens can be of variable length. The tokens are extracted with simple thresholds and later concatenated with variable algorithms such as: (i) generate conjunction signatures with greedy algorithm; (ii) generate token-subsequence signature with the Smith-Waterman algorithm; and (iii) generate Bayes signatures where approximate matching is applied. The analyzed traffic is not filtered based on worm types, thus the generated signatures are typical signatures for a set of worms. Clustering techniques are used to identify signatures for the same worm type.

In general, worm signature generation studies rely on a few formats as variations of sliding-window algorithms. W. Scheirer and M. Chuah in their article entitled "The Strength of Syntax Based Approaches to Dynamic Network Intrusion Detection," in Information Sciences and Systems, 40th Annual Conference on Volume, March 2006, (incorporated herein by reference) explained the types of available sliding-window algorithms and the selection of break points, which is the hex value of the instruction code corresponding to a specific action among worm's common behavior. The algorithms are called Fixed Partition Sliding Window Scheme (FPSW), Variable-length Partition Sliding Window Scheme (VPSW) and Variable-length Partition with Multiple Breakmarks (VPMB). The window is sliding across the multiple byte streams (or packet payloads) until they find the matching sequences. The problem occurs when applying these algorithms to normal traffic as there are no such break points in the payload due to difference of traffic nature. It is hard to determine where to stop and decide the appropriate comparison window size to start with. Therefore, it is difficult to apply the sliding window algorithm using break points to general Internet applications such as P2P.

Regular expression creation from spam is a similar recently discussed topic. GenRegexp proposes genetic regular expressions to effectively match spam, and show improvement from generation to generation. Genetic regular expressions leverage the genetic algorithm concepts of fitness, crossover, and mutation to evolve chromosomes across generations to find a superior solution. GenRegexp showed that the winning chromosome from the tenth (10^{th}) generation was over nine (9) times as effective as the winning chromosome from the first (1^{st}) generation.

ACAS uses ML-algorithms to construct application signatures based on the argument that ML-based methods are well fitted to this task. In ACAS, the first few bytes of the payloads are encoded to create a feature vector for the ML-algorithms which later extract the common ones. ACAS indicates a successful extraction of signatures from SMTP, FTP and HTTP traffic. However, these protocols cannot be regarded as complex as the extracted signatures have not been published.

In a learned treatise by H. Inoue, D. Jansens, A. Hijazi, and A. Somayaji, entitled "Netadhict: a tool for understanding network traffic," in LISA'07: Proceedings of the 21st conference on Large Installation System Administration Conference. Berkeley, CA, USA: USENIX Association, 2007, pp. 1-9 (herein referred to as NetADHICT and incorporated herein by reference), the key idea is that it can identify and present a hierarchical decomposition of traffic that is based upon the learned structure of both packet headers and payloads. Its main benefit is its visualization module but it does not differ much from other ML-based application signature clustering methods. The signatures contain the content, the length and the offset of the signature. The signatures are not merged later.

J. Ma, K. Levchenko, C. Kreibich, S. Savage, and G. M. Voelker, in a learned treatise entitled "Unexpected Means of Protocol Inference," in IMC '06: Proceedings of the 6th ACM SIGCOMM conference on Internet measurement. New York, NY, USA: ACM, 2006, pp. 313-326, the authors present three classification techniques for capturing statistical and structural aspects of messages exchanged in a protocol: product distributions of byte offsets, Markov models of byte transitions and common substring graphs of message strings. The substrings are not extracted from the payloads but the state transitions are calculated in every possible byte-to-byte step in the payload. The authors compare the performance of these classifiers using real-world traffic traces from three networks in two use settings and demonstrate that the classifiers can successfully group protocols without a priori knowledge. The authors analyzed common plain-text protocols such as, for example, SMTP, DNS and SSL.

B. Park, Y. J. Won, M. Kim, and J. W. Hong, in a learned treatise entitled, "Towards automated application signature generation for traffic identification," in NOMS, 2008, pp. 160-167 (herein after referred to as Laser and incorporated herein by reference), use Longest Common Subsequence (LCS) for the signature extraction step. The LCS is extracted from sample flows to be the signature of the given application. The algorithm compares two samples to get the longest common subsequence between them, and then compares it with other samples iteratively to refine it. In Laser, the common substrings are clustered based on packet sizes, similarity distance is calculated among the candidates and in case of high similarity, a character-by-character matching is initialized. Since the Laser algorithm iterates through the substrings multiple times, it is assumed not to be a good candidate for wire-speed processing. This algorithm produced signatures for several P2P protocols as well such as, for example, LimeWire, BitTorrent and Fileguri.

M. Ye, K. Xu, J. Wu, and H. Po, in a learned treatise entitled "Autosig-automatically generating signatures for applications" in CIT (2) IEEE Computer Society, pp. 104-109 (incorporated herein by reference), the authors presented AutoSig which extracts multiple common substring sequences from sample flows as application signature. All possible common substrings in an application protocol are extracted and then a substring tree is constructed to generate the final.

In US patent publication no. 2008/0127336 A1, an automated malware signature generation method is described in which malware signature is generated for incoming unknown files based on particular malware classification and access to malware signature is provided. The method includes monitoring incoming unknown files for the presence of malware, analyzing the incoming unknown files based on a set of classifiers of file behavior and a set of classifiers of file content and classifying the incoming unknown files with a particular malware classification based on the analysis of the incoming unknown files. A malware signature is generated for the incoming unknown files based on the particular malware classification and an access is provided to the malware signature.

In European patent 1959367A2, a method is disclosed for automatic generation of malware signatures from a computer file. The method determines an optimal cluster for generating malware signature and selects functions in optimal cluster as a malware signature.

The method includes creating a common function library (CFL). The functions of a computer file which does not contain a malware are extracted. The CFL is updated with new common functions while taking into consideration the remaining functions as candidates for generating malware signatures. The remaining functions are divided into clusters according to their location in the file. The optimal cluster for generating the malware signature is determined. The functions in the optimal cluster are selected as the malware signature.

These documents include basic heuristics which take into consideration text/string pattern signatures. The heuristics collect printable characters, email addresses, URLs and names into a database. This is a much simpler task than determining frequently occurring byte signatures with variable length.

A problem with existing methods is the processing speed. These methods can make only offline traffic processing possible with very limited set of samples which implies less expressive results.

Another problem is the formal verification of the algorithm's effectiveness. Existing solutions are built from small heuristic blocks. Motif finding is an elaborate mechanism constructed from formally analyzed build blocks.

However, the usage of these algorithms in network related context is not straightforward due to several reasons. For example, the number of symbols in bioinformatics is four (4) in DNA, five (5) in RNA and nineteen (19) in amino-acid sequences for example. In a network case, a one byte (1-byte) representation of network traffic streams induces 256 different symbols. Moreover, the probability densities of these symbols in a network also differ from those of DNA, RNA, amino acids, etc.

The information disclosed above is only for enhancement of understanding of the background of the invention and therefore it may contain information that does not form the prior art that is already known to a person of ordinary skill in the art.

### Summary

In an exemplary embodiment, a method of automatic signature generation for application recognition and user tracking over a network according to claim 1 is disclosed. Preferably, a method includes receiving a set of flows of Internet traffic, finding motifs in the Internet traffic, rating the motifs by looking them up in the set of flows of Internet traffic using sequence alignment to generate a sequence, creating clusters of motifs from the sequence and generating regular expressions (regexps) from the clusters of motifs to serve as traffic signatures. Preferably, the method may also include, prior to the step of finding motifs in the Internet traffic, estimating a Dirichlet mixture based on the flow of Internet traffic received and using said Dirichlet mixture to enhance said step of finding motifs in the Internet traffic. Preferably, a second flow may be separated from the cluster of motifs having a 80% threshold of hits and the second flows having a 80% threshold of hits may be removed to create a third flow. Preferably, the third flow may be combined with the motifs to form the sequence.

Preferably, the method may include repeating the steps of finding motifs, aligning the motifs, creating clusters of motifs and generating regexps occurrences until less than 10% of said flow of Internet traffic remains.

Preferably, the method may include pre-processing the flow of Internet traffic to reduce the volume of the flow of Internet traffic and create a filtered flow.

Preferably, the method may include the step of pre-processing by hashing the flow of Internet flows using a Rabin-Karp fingerprinting method to generate hashing results, extracting common substrings from the hashing results, generating signature candidates and removing padding from the signature candidates.

Preferably, the method may include post-processing the regexps occurrences to create a set of regexps.

Preferably, the method may include the post-processing by crosschecking generated signatures with other applications from the regexps occurrences to remove false positive results from the signatures, performing an offset distribution analysis of the signatures and checking for maximum coverage to achieve a global optimum in Internet traffic flow.

Preferably, automatic signature generation is performed either offline, online, in real time, in a RBS, SGSN, or GGSN in a 3G network or a BRAS, or a DSLAM in a DSL network.

In another exemplary embodiment, an apparatus for automatic signature generation for application recognition and user tracking over a network receiving a set of flows of Internet traffic according to claim 10 is disclosed. Preferably, the apparatus includes a motif finding module, a sequence alignment module and a create motif clusters module. Preferably, the motif finding module finds motifs in the set of flows of Internet traffic. Preferably, the sequence alignment module rates the motifs by looking them up in the set of flows of Internet traffic using sequence alignment and generates a sequence. Preferably, the create motif clusters module creates clusters of motifs from the sequence and generates regular expressions (regexps) from the clusters of motifs to serve as traffic signatures.

In a further exemplary embodiment, a computer program executable by a computer system and stored on a computer readable medium for automatic signature generation for application recognition and user tracking over a network according to claim 20 is disclosed. Preferably, the computer program receives a set of flows of Internet traffic, finds motifs in the Internet traffic, rates the motifs by looking them up in the set of flows of Internet traffic using sequence alignment to generate a sequence, creates clusters of motifs from the sequence and generates regular expressions (regexps) from the clusters of motifs to serve as traffic signatures.

The word "plurality" shall throughout the descriptions and claims be interpreted as "more than one".

### Brief Description of the Drawings

The several features, objects, and advantages of the invention will be understood by reading this description in conjunction with the drawings, in which:
- FIG. 1: is a general systems diagram of users interfacing to and communicating with the Internet via ISPs;
- FIG. 2: is a systems diagram illustrating Internet traffic flow being processed according to an exemplary embodiment of the invention;
- FIG. 3: is a systems diagram illustrating the processing modules according to an exemplary one of a number of embodiments consistent with the invention;
- FIG. 4: is a systems diagram of the processing modules used in regular expression construction motif finding according to an exemplary one of a number of embodiments consistent with the invention;
- FIG. 5: is a performance chart comparing the methodology of the present invention used to determine through positive coverage versus other approaches;
- FIG. 6: is a performance chart comparing the methodology of the present invention used to determine false positive coverage versus other approaches;
- FIG. 7: is a systems diagram of the pre-processing modules according to an exemplary one of a number of embodiments consistent with the invention; and
- FIG. 8: is a systems diagram of the post-processing modules according to an exemplary one of a number of embodiments consistent with the invention.

### Detailed Description

The following description of the implementations consistent with the invention refers to the accompanying drawings. The same reference numbers in different drawings identify the same or similar elements. The following detailed description does not limit the invention. Instead, the scope of the invention is defined by the appended claims.

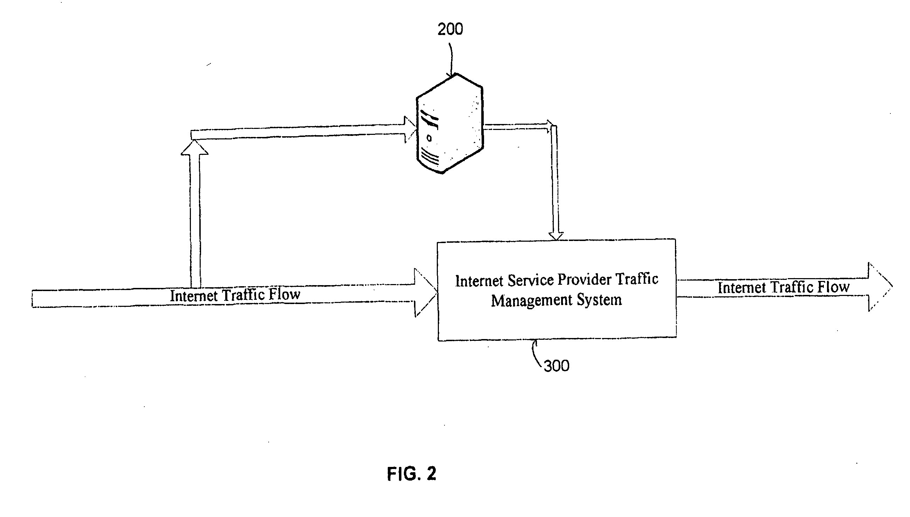

According to exemplary embodiments, an automatic application protocol signature generation system is provided. As illustrated in Fig. 2, this automatic application protocol signature generation system would execute on a processor-based system such as server 200. Server 200 is not limited to a single server or computer system, but may include any number of processor-based systems. As shown in figure 2, Internet traffic flow is entirely transmitted to the ISPs 110 Internet service provider traffic management system 300 in which normal Internet traffic is received and processed. However, server 200 on which the automatic application protocol signature generation system executes receives a small sample of the Internet traffic flow for analysis which is discussed below. This automatic application protocol signature generation system is able to analyze the Internet traffic flow to provide for a trade-off between speed and signature expressiveness.

As described in further detail later, Motif finding and sequence alignment algorithms may be used for this task (i.e. for setting up the automatic application protocol signature generation system) as these algorithms are used in bioinformatics for extraction of frequently occurring signatures.

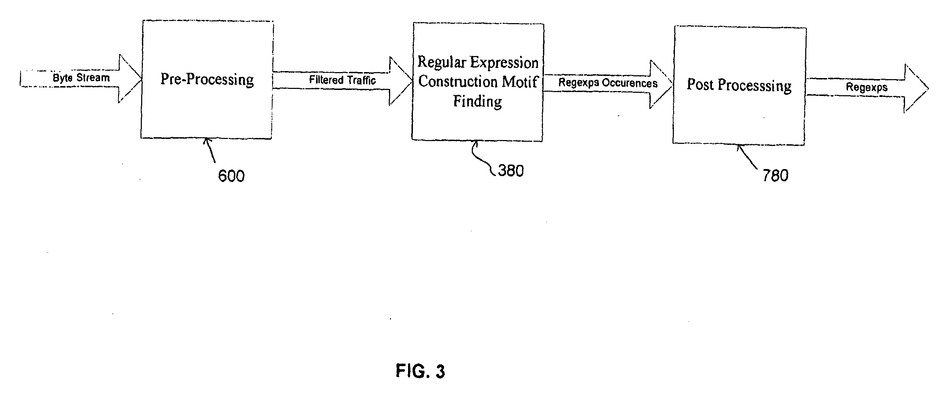

As illustrated in Fig. 3, the automatic application protocol signature generation system consists of three major modules. A preprocessing module 600 which receives a byte stream from the Internet traffic flow as illustrated in Fig. 2. This preprocessing module 600 generates a filtered traffic flow which is input to the regular expression construction motif finding module 380. Thereafter, the regular expression construction motif finding module 380 generates a series of regular expression (hereinafter referred to as regexp(s)) occurrences which are input into the postprocessing module 780 which outputs the final regexps. It should be noted that the regular expression construction motif finding module 380 may operate without the preprocessing module 600 and the postprocessing module 780. However, as will be discussed in further detail later, significant processing speed improvements can be realized through the incorporation of preprocessing module 680 and postprocessing module 780.

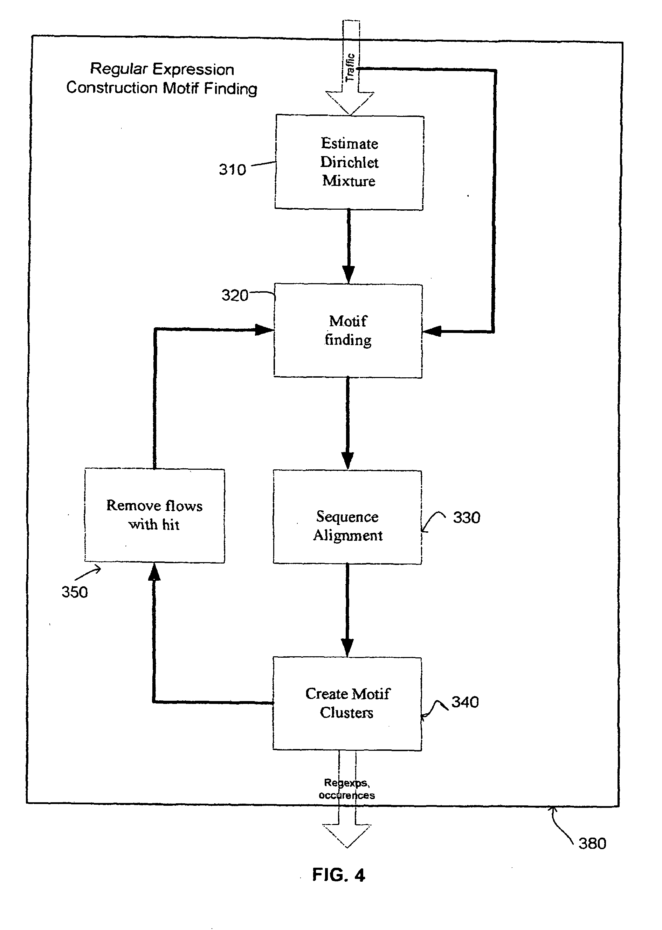

As illustrated in Fig. 4, an Internet traffic flow which may come directly from the Internet 100, as illustrated in Fig. 1 and Fig. 2, maybe input into the estimate Dirichlet mixture module 310 or a filtered Internet traffic flow may be provided by preprocessing module 600, as illustrated in figure 3. A Dirichlet mixture distribution may be used which is a weighted sum of Dirichlet distributions as discussed by K. Sjolander, K. Karplus, M. Brown, R. Hughey, A. Krogh, I. Mian, and D. Haussler, M.D. in a learned treatise entitled "Dirichlet mixtures: a method for improved detection of weak but significant protein sequence homology," Computer Applications in the Biosciences, vol. 12, no. 4, pp. 327-345, 1996 (incorporated herein by reference).

The motif finding module 320 and sequence alignment module 330 may be applied to construct regular expressions from the network traffic. Specifically, the motif finding module 320 may be accomplished as shown in Figure 1, of the learned treatise by Wenxuan Zhong, Peng Zeng, Ping Ma, Jun S. Liu and Yu Zhu entitled "RSIR: Regularized Sliced Inverse Regression for Motif Discovery" in Bioinformatics Advance Access Published by Oxford University Press (2005) (incorporated herein by reference). Further, the sequence alignment module 330 may be accomplished as described in the learned treatise entitled "Sequence Alignment: Methods, Models, Concepts, and Strategies" by Michael S. Rosenberg et al., (incorporated herein by reference). As previously discussed, the input of the system may be network traffic that has been collected. It may either be an application-aware active measurement or the capture of the traffic at an aggregating measurement point. If the input traffic is classified according to protocols (such as IMAP, HTTP, Bittorrent, etc.), the generated application signatures can be associated with applications.

The signatures are typically expected to be at the beginning of the flows if the traffic belongs to signalling or control traffic of an application. In other cases, the signatures can be anywhere in the byte stream. Since protocol messages, such as a large HTTP request for example, may overlap several packets, more than one packet has to be considered. Too many packets may result in too much data that has to be analyzed. In order to reduce the number of packets to be analyzed, only the first ten to one hundred (10 - 100) packets of each flow may be stored. The storing of the first 10 - 100 packets of each flow is applicable both in cases where the signatures are in a fixed position or in cases where they can be anywhere in the byte stream.

The packet traces may be utilized to reconstruct byte streams. That is, the order of the packets has to be rearranged taking into consideration retransmissions for example.

A motif is a possible gapped sequence of key positions which is a re-occurring semi-deterministic sequence pattern found in multiple sequences generated by the same source. Key positions hold symbols (sequence elements) that are important for the motifs function.

The prior distribution of the symbol appearances may incorporate prior knowledge of the functional similarities between symbols. As previously discussed, in order to accomplish this, a Dirichlet mixture distribution may be used which is a weighted sum of Dirichlet distributions.

The reconstructed flows (corresponding to the first 10 to 100 packets of the flow that are stored) may be provided as input to the Dirichlet mixture estimation module 310. The output of the Dirichlet mixture estimation module is a Dirichlet mixture.

The Dirichlet mixture and the reconstructed flows may be provided as multiple sequences (as inputs) to the motif finding algorithm.

A number of motif candidates may be established and each of these motif candidates may be compared to each of the input flows/sequences. The comparison of a motif candidate with an input sequence results in an alignment score. As a motif candidate is compared to each of the input flows/sequences, the alignment score for the motif candidate is accumulated. This process is repeated for each of the motif candidates. The output of the motif finding module 320 is a motif having the best alignment score on the given input sequences. That is, the motif candidate with the highest accumulated alignment score is selected.

In order to find the flows in which a hit occurred with the selected motif, sequence alignment module 330 may be applied on the flows with the motif candidate (i.e. motif candidate having the highest accumulated alignment score). That is, each of the flows may be compared with the selected motif candidate. The output of sequence alignment module 330 is a list of flow ids, starting and ending positions of the match in the decreasing order of the matching scores.

Since it is desirable to obtain signatures for regular expression matching, all the appearances of the motifs in the original flows may be collected by saving the substrings in the positions indicated by the sequence alignment process. The byte values on the same positions with multiple occurrences may be collected and a regular expression may be created by putting an OR operator between them. A similar method is used in "MEME-suite [2010]," discussed on website (http://meme.nbcr.net/meme4 3 0/doc/examples/meme example output files/meme.html) (incorporated herein by reference) for motif to regular expression conversion.

Applications typically have several protocol messages. In an extreme case, one particular motif could describe all protocol messages but the total alignment score would be lower than when the protocol messages are clustered and several motifs are defined for the message clusters. Motif clusters are created by the create motif clusters module 340 by defining the clusters based on the alignment scores.

Flows scoring at least 80% of the maximum value may be considered. These flows (the ones meeting the 80% threshold) are separated from the original set of flows and the whole regular expression construction process may be started over once the motif clusters have been created with the removal of flows with a hit accomplished by the remove flows module 350 which are then redirected back into the motif finding module 320 until no flows remain or some other threshold is achieved as illustrated in Fig. 4.

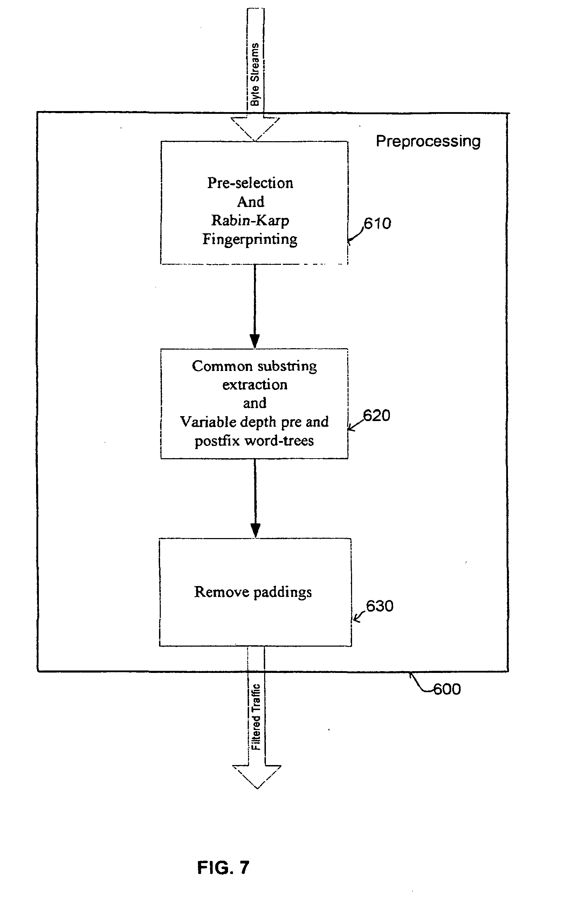

The process (i.e. the regular expression creation process) as described above may be shortened (or made faster) with the implementation of a pre-processing module 600 as detailed in Fig. 7, in the current exemplary embodiment of the present invention.

Referring to Fig. 7, in the pre-selection and Rabin Karp fingerprinting module 610 of the pre-processing phase, a fast, memory efficient technique may be applied to reduce the input size of the raw traffic significantly by filtering out substrings that occurred only once in the raw traffic.

One way to accomplish this is to create hashes from the content of a sliding window. The size of the hash table can be estimated and limited in order to control memory consumption. Then, by flagging each hash value seen, a determination can made as to whether a certain substring has been encountered. In order to correctly detect substrings shorter than the window size (Wₗₑₙ), a separate hash table for all string lengths below Wₗₑₙ is needed.

As previously discussed, the hash algorithm used may be the Rabin-Karp fingerprinting module 610 is described in Earlybird.

The pre-selection and Rabin Karp fingerprinting module 610 passes a substring to a second step of the pre-processing phase only if it has already been seen more than once. The output of the pre-selection and Rabin Karp fingerprinting module 610 may contain longer substrings divided into shifted smaller substrings occurring multiple times in the output. Therefore, common substring extraction and variable depth pre-and postfix word trees module 620 is included to collect the same pre-fixes and postfixes into the longest common substring. In this manner, the input to the motif finding module 320 may be further compressed.

In the common substring extraction and variable depth pre- and postfix word trees 620 illustrated in Fig. 7, common substrings from the input streams may be extracted. This may be accomplished by running a fixed length sliding window (of length Wₗₑₙ) over the input and inserting all window content into a tree and counting the times each string has been inserted. Each node in the tree may represent a substring which is not longer than Wₗₑₙ. By summing the counters on the leafs of each sub-tree below a node, the frequency of occurrence in the input stream of the prefix represented by the node can be determined.

A list of substrings that occurred more than Oₘᵢₙ times may be generated. When one of two substrings is a prefix of the other, only the longer one is considered except if the shorter one occurred at least Oₘᵢₙ times more than the longer one.

For example, if "abcde" occurred 10 times and "abc" occurred 30 times, it can be deducted that 10 out of the 30 occurrences of "abc" were as part of "abcde". If Oₘᵢₙ is 15 for example, "abc" will be printed (or output) with 20 occurrences (since "abc" occurred 20 times more than "abcde" which is more than the Oₘᵢₙ of 15). The resulting substrings may then be checked in the reverse direction once more to eliminate those which are postfixes of another string that is present.

The pre-processing module 600 may be run in a second pass on the input stream to detect common substrings longer than Wₗₑₙ. In this case, only those window contents which are preceded in the input by one of the substrings of maximum length (Wₗₑₙ) resulting from the first pass may be considered. If many occurrences of such a substring (always following the same Wₗₑₙ length substring from the first pass) are detected, this (i.e. common substrings longer than Wₗₑₙ) can be concatenated to the substring from the first pass. This process can be repeated in multiple passes to detect even longer common substrings. The result of the whole tree operation is a list of common substrings with an occurrence count.

A possible bottleneck in the prefix tree construction operation may be seen in memory consumption during the first pass. Thus, Wₗₑₙ has to be chosen as a function of the available memory. Many of the window contents may occur only once; yet, they may all be inserted into the tree. This limits the length of the window (Wₗₑₙ) and lengthens the process.

The output of the common substring extraction and variable depth pre and postfix word trees 620 is substring candidates with occurrence values. Motif finding may still be needed as there are several practical examples in which (e.g., the middle of a signature) there is a sequence number that takes all the possible 256 values of a byte many times (over the minimum occurrence threshold). These cases cannot be handled with the common substring extraction and variable depth pre and postfix word trees 620 alone.

Feeding the substring candidates to the motif finding module 320 may cause the loss of the occurrence information. A specific substring with high number of occurrences but with few substring variants may not be found by the motif finding module 320. These signatures (i.e. specific substrings with high number of occurrences but with few substring variants) should be added to motif clusters later. For example, if "abc" occurred 100 times and each of "efxg", "efyg" and "efzg" occurred 10 times, then the motif finding algorithm in this step would find with the last three, as a motif ("ef.g") can be found for them and does not consider the first one.

The output of the common substring extraction and variable depth pre- and postfix word trees 620 often contains signature candidates with long padding (for example, "00" and "ff" runs) in the network messages. Frequently, some optional fields are unused or unset in a protocol or reserved for later usage which results in long zero runs. The motif finding module 320 cannot judge which zero runs are part of a signature or which zero runs are only padding. These long zero runs are not considered to be part of the signatures. Therefore, the remove paddings module 630 is used to removing padding (i.e. the zeroes forming the padding).

The remove paddings module 630 may be added to the pre-processing phase to remove these zero runs. The remove paddings module 630 of pre-processing module 600 on the signatures skips all the forthcoming zeros in case of two zero bytes (i.e. two consecutive zero bytes). At the following non-zero byte, the collection of a new signature may start. The original signatures may thus be split by the double zero bytes. The same may be performed for the "ff ff" bytes.

The signature candidates yielded by motif finding module 320 are frequently occurring signatures in the given traffic. In order to further refine and restrict the signatures to the most valuable candidates, several post-processing phases may be applied in the exemplary embodiments of the present invention.

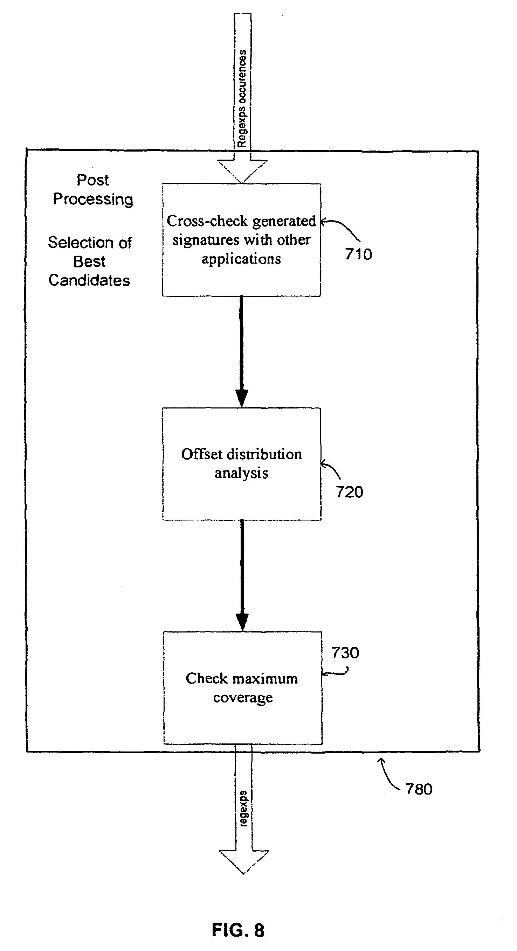

Referring to Fig. 8, the crosscheck generated signatures with other applications 710 in the post processing module 780 is the cross-check of the resulting signature candidates with other applications. Those signatures which can lead to false positive results should be removed.

The offset distribution analysis 720 of the post processing module 780 gathers additional information about the positions of signatures in specific byte streams of flows or packets.

The offset distribution analysis 720 receives the signatures and the flow list as input and provides the following information per signature: the number of occurrences the given signature occurred at a specific offset considering all the flows; the total number of matches of the specific signature (considering multiple times a multiple match per flow); the number of matches of the specific signature in different flows and the number of different users with hits.

The resulting signature set has often overlapping coverage on the flow set meaning that for one given flow, there are several signatures which occurred. This overlap is non-optimal for the DPI process as it has to check several signatures for the same hit ratio. In the check maximum coverage module 730 of the post-processing module 780 illustrated in Fig. 8, the minimal signature set which gives maximal flow, volume or user coverage is selected.

This check maximum coverage module 730 is called the weighted maximum coverage problem and considered to be NP-hard as discussed in the learned treatise by V. V. Vazirani, "Approximation Algorithms", New York, NY, USA:Springer-Verlag New York, Inc., 2001 (incorporated herein by reference). A global optimum can be reached only by brute-force method comparing the coverage of every possible signature set.

Several p2p files-sharing and streaming applications (such as for example, winny, share, keyholetv, etc.) transmit encrypted protocol messages. In a particular type of communication, obfuscated user communication, id information during the connection of other peers is sent several times from the dedicated port of the application. The method according to exemplary embodiments may be provided with the filtered traffic of dedicated ports and the existence of such frequently occurring user specific identifier is a strong clue for the identification of the above traffic types (i.e. winny, share, keyholetv).

The post-processing module 780 has to be exchanged with the cross-checking of high user coverage with the opposite: the only signatures that are acceptable in this case which has coverage only for one specific user.

If measurements are set up at several measurement points in the network of several ISP even with different access types (for example, both in a mobile and in a fixed network), the user traffic over the network may be tracked. Based on the raw network traffic, the users can be identified with MAC address in the fixed network and with an IMSI in the mobile network. Other, higher level subscriber information (e.g., name, address, telephone number) is usually unavailable due to privacy and other legal issues. Exemplary embodiments as described above can obtain user specific identifiers such as, for example, chat, email, peer login names and makes the association possible.

The advantage realized by exemplary embodiments as described above, such as the motif finding system being extended with the pre-processing phase, can achieve high flow coverage ratio with low CPU occupancy period. A systematic comparison of the quality of generated signatures in each phase and also to a state-of-the-art tool indicates that more expressive signatures are obtained in a shorter period of time than the state-of-the-art tool to the order of two magnitudes.

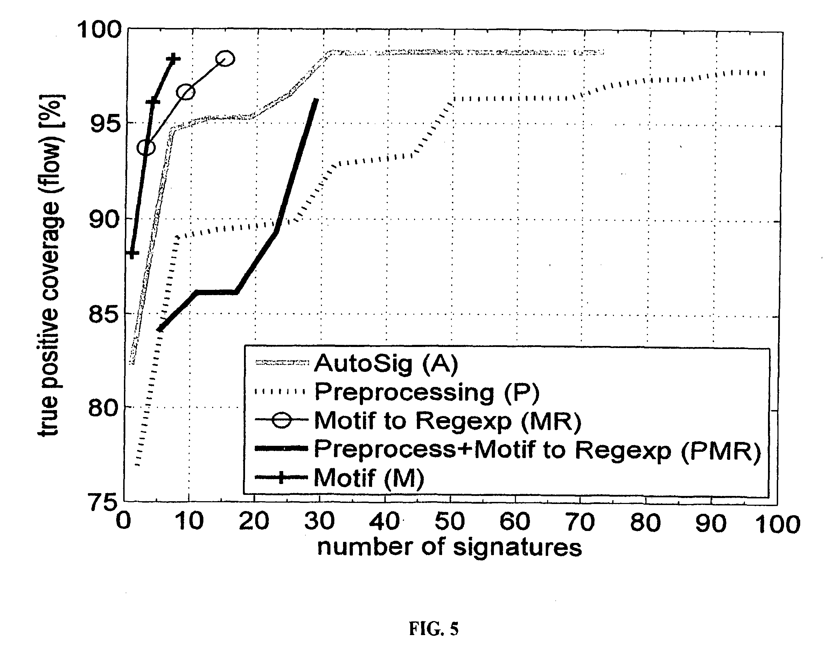

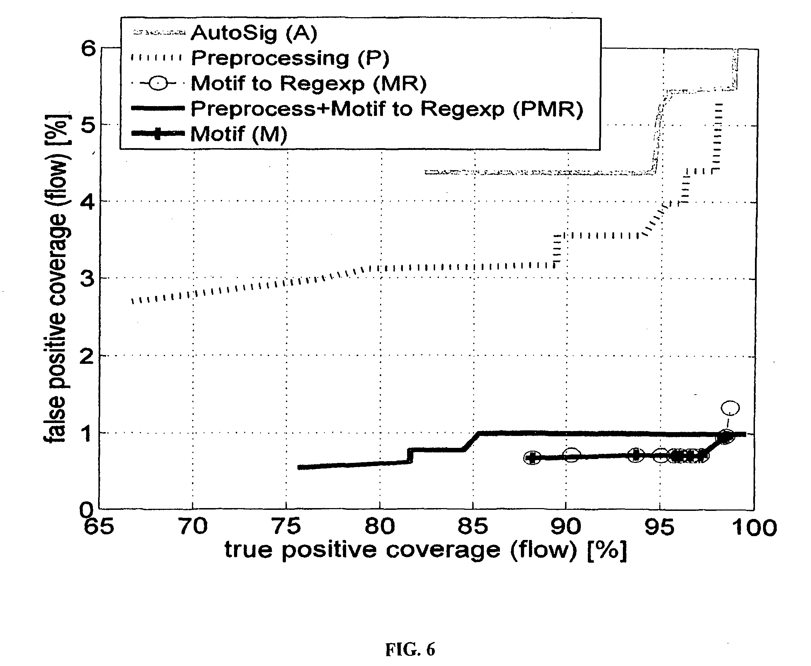

As illustrated in Fig. 5 and Fig. 6 as well as Table 1 listed below, faster processing and the increase in signature expressiveness are so significant exemplary embodiments provide new use cases in traffic classification such as, for example, online per-user signature generation.

**Table 1**

| | A | P | MR | PMR | M |
|---|---|---|---|---|---|
| Speed [flow/sec] | 0.02 | 12.76 | 0.16 | 3.38 | 0.16 |
| Avg. sig# | 51.43 | 171.23 | 13.6 | 29.3 | 9.17 |

Table 1 illustrates the speed and average number of generated signatures of the various methods, such as, AutoSig (A), Pre-processing (P), Motif to Regexp (MR), Pre-processing and Motif to Regexp (PMR) and Motif (M).

It will be appreciated that the procedures (arrangement) described above may be carried out repetitively as necessary. To facilitate understanding, many aspects of the invention are described in terms of sequences of actions. It will be recognized that the various actions could be performed by a combination of specialized circuits and software programming.

Thus, the invention may be embodied in many different forms, not all of which are described above, and all such forms are contemplated to be within the scope of the invention. It is emphasized that the terms "comprises" and "comprising", when used in this application, specify the presence of stated features, steps, or components and do not preclude the presence or addition of one or more other features, steps, components, or groups thereof.

The particular embodiments described above are merely illustrative and should not be considered restrictive in any way. The scope of the invention is determined by the following claims, and all variations that fall within the range of the claims are intended to be embraced therein.

## Claims

1. An automatic signature generation method for application recognition and user tracking over a network, comprising:
receiving a set of flows of Internet traffic;
**characterized by**:
finding motifs in the Internet traffic;
rating the motifs by looking them up in the set of flows of Internet traffic using sequence alignment to generate a sequence, wherein the sequence is an ordered list of flow ids indicating alignment scores between the set of flows and the motifs;
creating clusters of motifs from the sequence by defining the clusters based on the alignment scores; and
generating regular expressions, regexps, from the clusters of motifs to serve as traffic signatures.

2. The method of claim 1, wherein prior to the step of finding motifs in the Internet traffic, estimating a Dirichlet mixture based on the flow of Internet traffic received and using said Dirichlet mixture to enhance said step of finding motifs in the Internet traffic.

3. The method of claim 1, further comprising:
separating a second flow from the cluster of motifs having a 80% threshold of hits occurred with one of the motifs; and
removing said second flows having a 80% threshold of the hits to create a third flow.

4. The method of claim 3, further comprising:
combining the third flow with the motifs to form said sequence; and
repeating the steps of finding motifs, aligning the motifs, creating clusters of motifs and generating regexps occurrences until less than 10% of said flow of Internet traffic remains.

5. The method of claim 1, further comprising:
post-processing the regexps occurrences to create a set of regexps.

6. The method of claim 5, wherein the post-processing further comprises:
crosschecking generated signatures with other applications from the regexps occurrences to remove false positive results from the signatures;
performing an offset distribution analysis of the signatures; and
checking for maximum coverage to achieve a global optimum in Internet traffic flow.

7. The method of claim 1, wherein the automatic signature generation is performed in at least one of offline, online, in real time, in a RBS, SGSN, or GGSN in a 3G network and a BRAS or a DSLAM in a DSL network.

8. An apparatus for automatic signature generation for application recognition and user tracking over a network receiving a set of flows of Internet traffic, **characterized by**:
a motif finding module (320) to find motifs in the set of flows of Internet traffic;
a sequence alignment module (330) to rate the motifs by looking them up in the set of flows of Internet traffic using sequence alignment to generate a sequence, wherein the sequence is an ordered list of flow ids indicating alignment scores between the set of flows and the motifs; and
a create motif clusters module (340) to create clusters of motifs from the sequence by defining the clusters based on the alignment scores and to generate regular expressions, regexps, from the clusters of motifs to serve as traffic signatures.

9. The apparatus of claim 8, wherein prior to the motif finding module finding motifs in the set of flows of Internet traffic, an estimate Dirichlet mixture module (310) is configured to estimate a Dirichlet mixture based on the flows of Internet traffic received and to use said Dirichlet mixture to enhance finding of motifs by the motif finding module in the Internet traffic.

10. The apparatus of claim 8, further comprising:
a remove flows with hit module (350) to separate a second flow from the cluster of motifs having a 80% threshold of hits occurred with one of the motifs and to remove said second flows having a 80% threshold of the hits to create a third flow.

11. The apparatus of claim 10, wherein said motif finding module is configured to combine the third flow with the motifs to form said sequence.

12. The apparatus of claim 11, wherein the execution of the motif finding module, the sequence alignment module and the create motif clusters module is repeated until less than 10% of said flow of Internet traffic remains.

13. The apparatus of claim 8, further comprising:
a post-processing module (780) to create a set of regexps from the regexps occurrences.

14. The apparatus of claim 13, wherein the post-processing module further comprises:
a crosscheck generated signatures with other applications module (710) to crosscheck generated signatures with other applications from the regexps occurrences to remove false positive results from the signature;
an offset distribution analysis module (720) to perform an offset distribution analysis of the signatures; and
a check maximum coverage module (730) to check for maximum coverage to achieve a global optimum in Internet traffic flow.

15. The apparatus of claim 8, wherein the automatic signature generation is performed in at least one of offline, online, in real time, in a RBS, SGSN, or GGSN in a 3G network and a BRAS or a DSLAM in a DSL network.

16. A computer program executable by a computer system and stored on a computer readable medium for automatic signature generation for application recognition and user tracking over a network, comprising the steps of any one of method claims 1 to 7.

## Patentansprüche

1. Automatisches Signaturerzeugungsverfahren zur Anwendungserkennung und Benutzerverfolgung über ein Netzwerk, umfassend:
Empfangen eines Satzes von Strömen an Internetverkehr;
**gekennzeichnet durch**:
Auffinden von Motiven in dem Internetverkehr;
Einstufen der Motive **durch** deren Nachschlagen in dem Satz von Strömen des Internetverkehrs unter Verwendung eines Sequenzableichs, um eine Sequenz zu erzeugen, wobei die Sequenz eine geordnete Liste von Stromkennungen ist, die Abgleichsbewertungen zwischen dem Satz von Strömen und den Motiven angibt;
Erstellen von Motivclustern aus der Sequenz **durch** Definieren der Cluster auf Grundlage der Abgleichsbewertungen; und
Erzeugen von regulären Ausdrücken, Regexps, aus den Motivclustern, um als Verkehrssignaturen zu dienen.

2. Verfahren gemäß Anspruch 1, wobei vor dem Schritt des Auffindens von Motiven in dem Internetverkehr eine Dirichlet-Mischung geschätzt wird auf der Grundlage des empfangenen Stroms des Internetverkehrs und die Dirichlet-Mischung verwendet wird, um den Schritt des Auffindens von Motiven in dem Internetverkehr zu steigern.

3. Verfahren gemäß Anspruch 1, weiterhin umfassend:
Trennen eines zweiten Stroms aus dem Motivcluster, der einen Schwellwert von 80% an aufgetretenen Treffern mit einem der Motive aufweist; und
Entfernen des zweiten Stroms, der eine 80%-ige Schwelle der Treffer aufweist, um einen dritten Strom zu erzeugen.

4. Verfahren gemäß Anspruch 3, weiterhin umfassend:
Kombinieren des dritten Stroms mit den Motiven, um die Sequenz auszubilden; und
Wiederholen der Schritte Auffinden von Motiven, Abgleichen der Motive, Erstellen von Motivclustern und Erzeugen von Regexp-Vorkommen, bis weniger als 10% des Stroms an Internetverkehr verbleibt.

5. Verfahren gemäß Anspruch 1, weiterhin umfassend:
Nachverarbeiten der Regexp-Vorkommen, um einen Satz von Regexps zu erstellen.

6. Verfahren gemäß Anspruch 5, wobei die Nachverarbeitung weiterhin umfasst:
Gegenprüfen von erzeugten Signaturen mit anderen Anwendungen aus den Regexp-Vorkommen, um falsche positive Ergebnisse aus den Signaturen zu entfernen;
Durchführen einer Offsetverteilungsanalyse der Signaturen; und
Prüfen einer maximalen Abdeckung, um ein globales Optimum an Internetverkehrsfluss zu erreichen.

7. Verfahren gemäß Anspruch 1, wobei die automatische Signaturerzeugung in zumindest einem aus Offline, Online, in Echtzeit, in einem RBS, einem SGSN oder einem GGSN in einem 3G-Netzwerk und einem BRAS oder einem DSLAM in einem DSL-Netzwerk durchgeführt wird.

8. Vorrichtung zur automatischen Signaturerzeugung zur Anwendungserkennung und Benutzerverfolgung über ein Netzwerk, das einen Satz an Strömen von Internetverkehr empfängt, **gekennzeichnet durch**:
ein Motivauffindungsmodul (320), um Motive in dem Satz von Strömen an Internetverkehr aufzufinden;
ein Sequenzabgleichmodul (330), um die Motive einzustufen **durch** deren Nachschlagen in dem Satz von Strömen an Internetverkehr unter Verwendung eines Sequenzabgleichs, um eine Sequenz zu erzeugen, wobei die Sequenz eine geordnete Liste von Stromkennungen ist, die Abgleichsbewertungen zwischen dem Satz an Strömen und den Motiven angibt; und
ein Motivclustererstellungsmodul (340), um Motivcluster aus der Sequenz durch Definieren der Cluster auf der Grundlage der Abgleichsbewertungen zu erstellen und um reguläre Ausdrücke, Regexps, aus den Motivclustern zu erzeugen, um als Verkehrssignaturen zu dienen.

9. Vorrichtung gemäß Anspruch 8, wobei, bevor das Motivauffindungsmodul Motive in dem Satz von Strömen an Internetverkehr auffindet, ein Schätzungs-Dirichlet-Mischungsmodul (310) konfiguriert ist, um eine Dirichlet-Mischung auf der Grundlage der Ströme an empfangenem Internetverkehr zu schätzen und um die Dirichlet-Mischung zu verwenden, um das Auffinden von Motiven durch das Motivauffindungsmodul in dem Internetverkehr zu steigern.

10. Verfahren gemäß Anspruch 8, weiterhin umfassend:
ein Modul (350) zur Entfernung von Strömen mit Treffern, um einen zweiten Strom aus dem Motivcluster zu trennen, der einen Schwellwert von 80% aufgetretener Treffer mit einem der Motive aufweist, und um die zweiten Ströme mit einem 80%-igen Schwellwert der Treffer zu entfernen, um einen dritten Strom zu erstellen.

11. Vorrichtung gemäß Anspruch 10, wobei das Motivauffindungsmodul konfiguriert ist, um den dritten Strom mit den Motiven zu kombinieren, um die Sequenz auszubilden.

12. Vorrichtung gemäß Anspruch 11, wobei die Ausführung des Motivauffindungsmoduls, des Sequenzabgleichmoduls und des Motivclustererstellungsmoduls wiederholt wird, bis weniger als 10% des Stroms an Internetverkehr verbleibt.

13. Vorrichtung gemäß Anspruch 8, weiterhin umfassend:
ein Nachverarbeitungsmodul (780), um einen Satz von Regexps aus den Regexp-Vorkommen zu erstellen.

14. Vorrichtung gemäß Anspruch 13, wobei das Nachverarbeitungsmodul weiterhin umfasst:
ein Modul (710) zur Gegenprüfung von erzeugten Signaturen mit anderen Anwendungen, um erzeugte Signaturen mit anderen Anwendungen aus den Regexp-Vorkommen gegenzuprüfen, um falsche positive Ergebnisse aus der Signatur zu entfernen;
ein Offsetverteilungsanalysemodul (720), um eine Offsetverteilungsanalyse der Signaturen durchzuführen; und
ein Modul (730) zur Prüfung einer maximalen Abdeckung, um eine maximale Abdeckung zu prüfen, um ein globales Optimum in dem Internetverkehrsstrom zu erreichen.

15. Vorrichtung gemäß Anspruch 8, wobei die automatische Signaturerzeugung in zumindest einem aus Offline, Online, in Echtzeit, in einem RBS, einem SGSN oder einem GGSN in einem 3G-Netzwerk und einem BRAS oder einem DSLAM in einem DSL-Netzwerk durchgeführt wird.

16. Computerprogramm, das durch ein Computersystem ausführbar ist und auf einem computerlesbaren Medium zur automatischen Signaturerzeugung zur Anwendungserkennung und Benutzerverfolgung über das Netzwerk gespeichert ist, umfassend die Schritte gemäß zumindest einem der Verfahrensansprüche 1 bis 7.

## Revendications

1. Procédé de génération automatique de signatures pour une reconnaissance d'application et un suivi d'utilisateur sur un réseau, comprenant :
la réception d'un ensemble de flux de trafic Internet ;
**caractérisé par** :
la découverte de motifs dans le trafic Internet ;
la notation des motifs en les recherchant dans l'ensemble de flux de trafic Internet en utilisant un alignement de séquences pour générer une séquence, dans lequel la séquence est une liste ordonnée d'ID de flux indiquant des scores d'alignement entre l'ensemble de flux et les motifs ;
la création de groupes de motifs à partir de la séquence en définissant les groupes sur la base des scores d'alignement ; et
la génération d'expressions normales, regexps, à partir des groupes de motifs pour servir de signatures de trafic.

2. Procédé selon la revendication 1, dans lequel, avant l'étape de découverte de motifs dans le trafic Internet, estimation d'un mélange de Dirichlet sur la base du flux de trafic Internet reçu et utilisation dudit mélange de Dirichlet pour améliorer ladite étape de découverte de motifs dans le trafic Internet.

3. Procédé selon la revendication 1, comprenant en outre :
la séparation d'un deuxième flux à partir du groupe de motifs ayant un seuil de 80 % de résultats positifs apparaissant avec un des motifs ; et
suppression desdits deuxièmes flux ayant un seuil de 80 % des résultats positifs pour créer un troisième flux.

4. Procédé selon la revendication 3, comprenant en outre :
la combinaison du troisième flux avec les motifs pour former ladite séquence ; et
la répétition des étapes de découverte de motifs, d'alignement des motifs, de création de groupes de motifs et de génération d'occurrences regexps jusqu'à ce que moins de 10 % dudit flux de trafic Internet subsiste.

5. Procédé selon la revendication 4, comprenant en outre :
le post-traitement des occurrences regexps pour créer un ensemble de regexps.

6. Procédé selon la revendication 5, dans lequel le post-traitement comprend en outre :
le recoupement des signatures générées avec d'autres applications à partir des occurrences regexps pour éliminer des résultats faux positifs des signatures ;
l'exécution d'une analyse de distribution de décalages des signatures ; et
le contrôle d'une couverture maximum pour parvenir à un optimum global dans le flux de trafic Internet.

7. Procédé selon la revendication 1, dans lequel la génération automatique de signatures est exécutée au moins un parmi en ligne, hors ligne, en temps réel dans un RBS, un SGSN, ou un GGSN dans un réseau 3G et un BRAS ou un DSLAM dans un réseau DSL.

8. Appareil pour une génération automatique de signatures pour une reconnaissance d'application et un suivi d'utilisateur sur un réseau recevant un ensemble de flux de trafic Internet, **caractérisé par** :
un module (320) de découverte de motifs pour découvrir des motifs dans l'ensemble de flux de trafic Internet ;
un module (330) d'alignement de séquences pour noter les motifs en les recherchant dans l'ensemble de flux de trafic Internet en utilisant un alignement de séquences pour générer une séquence, dans lequel la séquence est une liste ordonnée d'ID de flux indiquant des scores d'alignement entre l'ensemble de flux et les motifs ; et
un module (340) de création de groupes de motifs pour créer des groupes de motifs à partir de la séquence en définissant les groupes sur la base des scores d'alignement et pour générer des expressions normales, regexps, à partir des groupes de motifs pour servir de signatures de trafic.

9. Appareil selon la revendication 8, dans lequel, avant que le module de découverte de motifs ne découvre des motifs dans l'ensemble de flux de trafic Internet, un module (310) d'estimation de mélange de Dirichlet est configuré pour estimer un mélange de Dirichlet sur la base des flux de trafic Internet reçus et pour utiliser ledit mélange de Dirichlet pour améliorer la découverte de motifs par le module de découverte de motifs dans le trafic Internet.

10. Appareil selon la revendication 8, comprenant en outre :
un module (350) de suppression de flux avec des résultats positifs pour séparer un deuxième flux à partir du groupe de motifs ayant un seuil de 80 % de résultats positifs apparaissant avec un des motifs et pour supprimer lesdits deuxièmes flux ayant un seuil de 80 % des résultats positifs pour créer un troisième flux.

11. Appareil selon la revendication 10, dans lequel ledit module de découverte de motifs est configuré pour combiner le troisième flux avec les motifs pour former ladite séquence.

12. Appareil selon la revendication 11, dans lequel l'exécution du module de découverte de motifs, du module d'alignement de séquences et du module de création de groupes de motifs est répétée jusqu'à ce que moins de 10 % dudit flux de trafic Internet subsiste.

13. Appareil selon la revendication 8, comprenant en outre :
un module (780) de post-traitement pour créer un ensemble de regexps à partir des occurrences regexps.

14. Appareil selon la revendication 13, dans lequel le module de post-traitement comprend en outre :
un module (710) de recoupement de signatures générées avec d'autres applications pour recouper les signatures générées avec d'autres applications à partir des occurrences regexps pour éliminer des résultats faux positifs des signatures ;
un module (720) d'analyse de distribution de décalages pour exécuter une analyse de distribution de décalages des signatures ; et
un module (730) de contrôle de couverture maximum pour contrôler une couverture maximum pour parvenir à un optimum global dans le flux de trafic Internet.

15. Appareil selon la revendication 8, dans lequel la génération automatique de signatures est exécutée au moins un parmi en ligne, hors ligne, en temps réel dans un RBS, un SGSN, ou un GGSN dans un réseau 3G et un BRAS ou un DSLAM dans un réseau DSL.

16. Programme informatique exécutable par un système d'ordinateur et stocké sur un support lisible par un ordinateur pour une génération automatique de signatures pour une reconnaissance d'application et un suivi d'utilisateur sur un réseau, comprenant les étapes selon l'une quelconque des revendications de procédé 1 à 7.
